# EUROPÄISCHE PATENTANMELDUNG

(11) **EP 4 843 793 A1**
(43) Veröffentlichungstag der Anmeldung: **25.11.2026**
(21) Anmeldenummer: 25177253.9
(22) Anmeldetag: 19.05.2025
(51) Int. Cl.: B60C 1/00, B60C 11/00, B60C 19/08

(54) **FAHRZEUGREIFEN, INSBESONDERE NUTZFAHRZEUGREIFEN**

(71) Anmelder: Continental Reifen Deutschland GmbH, 30175 Hannover (DE)
(72) Erfinder: Atzert, Sonja-Beatrice, 30175 Hannover (DE); Große, Julia, 30175 Hannover (DE); Kleffmann, Jens, 30175 Hannover (DE)
(74) Vertreter: Continental Corporation

(57) **Zusammenfassung**

Die Erfindung betrifft einen Fahrzeugreifen, insbesondere Nutzfahrzeugreifen, mit einem Laufstreifen (1) mit einem oder mehreren Laufstreifenteil(en) (1₂, 6), welcher bzw. welche jeweils aus einer Acetylenruß(e) enthaltenden Kautschukmischung hergestellt ist bzw. sind.

Das Gummimaterial (G2, G3) des Laufstreifenteils (1₂, 6) bzw. der Laufstreifenteile (1₂, 6) ist integraler Bestandteil des Ableitwegs zur Ableitung elektrostatischer Aufladungen,
wobei das Gummimaterial (G2, G3)
eine Rückprallelastizität, ermittelt nach ISO 4662 bei einer Temperatur von 23°C (R (23°C)), von mindestens 54,0%,
eine Rückprallelastizität, ermittelt nach ISO 4662 bei einer Temperatur von 70°C (R (70°C)), von mindestens 65,0% sowie
einen spezifischen elektrischen Widerstand von maximal 1,0 x 10⁶ Ω·m aufweist.

## Beschreibung

Die Erfindung betrifft einen Fahrzeugreifen, insbesondere Nutzfahrzeugreifen, mit einem profilierten Laufstreifen mit einem oder mehreren Laufstreifenteil(en), welcher bzw. welche jeweils aus einer Acetylenruß(e) enthaltenden Kautschukmischung hergestellt ist bzw. sind und aus einem Gummimaterial besteht bzw. bestehen, wobei der Fahrzeugreifen einen Ableitweg zur Ableitung elektrostatischer Aufladungen aufweist.

Ein derartiger Fahrzeugreifen ist beispielsweise aus der DE 10 2005 049 183 A1 bekannt. Dieser Fahrzeugreifen weist einem Gürtelverband und einen profilierten Laufstreifen mit einer Laufstreifencap, einer Laufstreifenbase und einen streifenförmigen, radial innersten Laufstreifenteil auf. Das Gummimaterial der Laufstreifenbase weist eine um mindestens 20% höhere Wärmeleitfähigkeit als das Gummimaterial der Laufstreifencap und eine um mindestens 10% höhere Wärmeleitfähigkeit als das Gummimaterial des streifenförmigen, radial innersten Laufstreifenteils auf. Die Laufstreifenbase besteht bevorzugt aus einem Gummimaterial, welches aus einer Acetylenruß enthaltenden Kautschukmischung hergestellt ist. Der Fahrzeugreifen zeichnet sich durch eine geringe Temperatur- und Wärmeentwicklung im Bereich der Gürtelkanten und eine gute Rissbeständigkeit der Laufstreifenbase aus.

Es ist ferner grundsätzlich üblich, Fahrzeugreifen mit einem Ableitweg zur Ableitung elektrostatischer Aufladungen auszustatten, sodass davon auszugehen ist, dass auch der Fahrzeugreifen aus der DE 10 2005 049 183 A1 einen solchen aufweist.

Die Reduzierung des Rollwiderstands von Fahrzeugreifen ist aufgrund immer strenger werdender regulatorischer Anforderungen fortlaufend Bestandteil der

Reifenentwicklung. Dabei ist es bekannt, dass für ein geringer Rollwiderstand insbesondere der Einsatz von Kautschukmischungen günstig ist, welche eine geringe Menge an Füllstoffen oder Füllstoffe mit einer geringen Aktivität, welche beispielsweise mit einer geringen BET-Oberfläche der Füllstoffe korrespondiert, enthalten, wobei bedingt durch die erforderlichen quasistatischen mechanischen Eigenschaften, wie beispielsweise der Reißfestigkeit oder der Härte, als Füllstoffe vorrangig Ruße und/oder Kieselsäuren eingesetzt werden. Zumindest vorwiegend Kieselsäure als Füllstoff enthaltende Kautschukmischungen liefern Gummimaterialien, deren Beitrag zum Rollwiderstand günstiger Weise gering ist. Die elektrische Leitfähigkeit solcher Gummimaterialien ist üblicherweise jedoch nicht ausreichend, um die aus diesen Gummimaterialien bestehenden Reifenbauteile in den Ableitweg zur Ableitung elektrostatischer Aufladungen zu integrieren.

Der Erfindung liegt daher die Aufgabe zugrunde, bei einem Fahrzeugreifen der eingangs genannten Art unter Aufrechterhaltung eines zuverlässigen Ableitwegs zur Ableitung elektrostatischer Aufladungen den Beitrag des Laufstreifens zum Rollwiderstand des Reifens zu reduzieren.

Gelöst wird die gestellte Aufgabe erfindungsgemäß dadurch, dass das Gummimaterial des Laufstreifenteils bzw. der Laufstreifenteile, welcher bzw. welche jeweils aus einer Acetylenruß(e) enthaltenden Kautschukmischung gefertigt ist bzw. sind, integraler Bestandteil des Ableitwegs zur Ableitung elektrostatischer Aufladungen ist,
wobei das Gummimaterial
eine Rückprallelastizität, ermittelt nach ISO 4662 bei einer Temperatur von 23°C, von mindestens 54,0%,
eine Rückprallelastizität, ermittelt nach ISO 4662 bei einer Temperatur von 70°C, von mindestens 65,0% sowie
einen spezifischen elektrischen Widerstand von maximal 1,0 x 10⁶ Ω·m aufweist.

Überraschender Weise hat sich herausgestellt, dass sich das Gummimaterial aus der Acetylenruß(e) enthaltenden Kautschukmischung derart ausführen lässt, dass es einen besonders geringen spezifischen elektrischen Widerstand und gleichzeitig eine hohe Rückprallelastizität aufweist. Der bzw. die aus diesem Gummimaterial bestehenden Laufstreifenteile lassen sich somit hervorragend in den Ableitweg integrieren und zeigen - entsprechend der hohen Rückprallelastizitäten - einen besonders geringen Beitrag zum Rollwiderstand. Beim erfindungsgemäß ausgeführten Fahrzeugreifen ist somit der Zielkonflikt zwischen dem Rollwiderstand und der elektrischen Leitfähigkeit auf einem höheren Niveau als bisher gelöst.

Gemäß einer ersten bevorzugten Ausführung ist als Laufstreifenteil, welcher integraler Bestandteil des Ableitwegs ist, eine im Reifenquerschnitt in axialer Richtung langgestreckte, radial innerste Laufstreifenschicht vorgesehen, welche insbesondere über die komplette in axialer Richtung ermittelte Breite des Laufstreifens verläuft. Eine solche Laufstreifenschicht ist im Hinblick auf den Rollwiderstand des Reifens besonders günstig.

Bei der ersten bevorzugten Ausführung ist gemäß einer vorteilhaften Weiterentwicklung vorgesehen, dass die Laufstreifenschicht an der dicksten Stelle in radialer Richtung eine maximale Stärke von mindestens 2,0 mm, insbesondere von mindestens 3,0 mm, bevorzugt von mindestens 4,0 mm, besonders bevorzugt von mindestens 6,0 mm, mehr bevorzugt von mindestens 10,0 mm, am meisten bevorzugt von mindestens 12,0 mm, aufweist.

Bei der ersten bevorzugten Ausführung ist gemäß einer weiteren vorteilhaften Weiterentwicklung vorgesehen, dass die Laufstreifenschicht, betrachtet im Reifenquerschnitt, eine Querschnittsfläche mit einem Flächeninhalt von mindestens 15%, insbesondere von mindestes 20%, bevorzugt von mindestens 25%, besonders bevorzugt von mindestens 30%, mehr bevorzugt von mindestens 35%, am meisten bevorzugt von mindestes 40%, des Flächeninhalts der Querschnittsfläche des Laufstreifens aufweist. Dies trägt zu einer weiteren Reduktion des Rollwiderstands bei.

Gemäß einer weiteren bevorzugten Ausführung ist als Laufstreifenteil, welcher integraler Bestandteil des Ableitwegs ist, zumindest ein bis zur Laufstreifenaußenfläche des Laufstreifens reichendes Laufstreifenelement vorgesehen, welches, im Reifenquerschnitt betrachtet, in axialer Richtung eine maximale Breite von höchstens 40,0 mm, insbesondere von höchstens 20,0 mm, vorzugsweise von höchstens 10,0 mm, bevorzugt von höchstens 8,0 mm, besonders bevorzugt von 2,0 mm bis 6,0 mm, am meisten bevorzugt von 1,0 mm bis 4,0 mm, aufweist und welches den Laufstreifen in radialer Richtung vorzugsweise durchsetzt. Ein solches Laufstreifenelement trägt zu einer besonders vorteilhaften Lösung des erwähnten Zielkonflikts bei.

Es ist ferner bevorzugt, wenn die radial innerste Laufstreifenschicht und das bzw. die bis zur Laufstreifenaußenfläche des Laufstreifens reichende(n) Laufstreifenelement(e) die einzigen Laufstreifenteile sind, welche integrale Bestandteile des Ableitwegs sind. Dies gestattet vor allem eine im Hinblick auf den Rollwiderstand günstige Auslegung der Gummimaterialien der weiteren Reifenbauteile.

Eine weitere bevorzugte Ausführung sieht vor, dass das elektrisch leitende Gummimaterial des Laufstreifenteils bzw. der Laufstreifenteile einen Verlustfaktor, ermittelt nach ISO 4661-1 bei einer Temperatur von 70°C, von maximal 0,065, insbesondere von maximal 0,055, aufweist. Dieser Verlustfaktor stellt - neben den Rückprallelastizitäten - einen weiteren Rollwiderstandsindikator dar, wobei ein derart ausgeführtes Gummimaterial zu einem noch geringen Rollwiderstand beiträgt.

Gemäß einer weiteren bevorzugten Ausführung weist das elektrisch leitende Gummimaterial des Laufstreifenteils bzw. der Laufstreifenteile eine Shore-Härte-A, ermittelt nach DIN EN ISO 868 bei einer Temperatur von 23°C, von mindestens 61,0 ShA, insbesondere von mindestens 62,0 ShA, vorzugsweise von mindestens 64,0 ShA, besonders bevorzugt von mindestens 65,0 ShA, auf. Die Shore-Härte-A steht im Zusammenhang mit der strukturellen Haltbarkeit des Kronenbereichs des Fahrzeugreifens und zeigt in der Folge Auswirkungen auf die Reifentragfähigkeit. Das entsprechend harte Gummimaterial trägt zu einer hohen Reifentragfähigkeit bei.

In diesem Zusammenhang ist es ferner günstig, wenn auch bei höherer Temperatur eine entsprechende Härte vorliegt, sodass es vorteilhaft ist, wenn das elektrisch leitende Gummimaterial des Laufstreifenteils bzw. der Laufstreifenteile eine Shore-Härte-A, ermittelt nach DIN EN ISO 868 bei einer Temperatur von 70°C, von mindestens 58,0 ShA, insbesondere von mindestens 60,0 ShA, vorzugsweise von mindestens 61,5 ShA, besonders bevorzugt von mindestens 62,0 ShA, aufweist.

Für den Rollwiderstand des Reifens ist es besonders günstig, wenn das elektrisch leitende Gummimaterial des Laufstreifenteils bzw. der Laufstreifenteile eine Rückprallelastizität, ermittelt nach ISO 4662 bei einer Temperatur von 23°C, von mindestens 56,0%, vorzugsweise von mindestens 58,0%, aufweist.

In diesem Zusammenhang ist es ferner besonders günstig, wenn das elektrisch leitende Gummimaterial des Laufstreifenteils bzw. der Laufstreifenteile eine Rückprallelastizität, ermittelt nach ISO 4662 bei einer Temperatur von 70°C, von mindestens 67,0%, vorzugsweise von mindestens 70,0%, aufweist.

Für die Ableiteigenschaften des Reifens ist vorteilhaft, wenn das elektrisch leitende Gummimaterial des Laufstreifenteils bzw. der Laufstreifenteile einen spezifischen elektrischen Widerstand von maximal 1,0 x 10⁵ Ω·m, vorzugsweise von maximal 1,0 x 10⁴ Ω·m, bevorzugt von maximal 5,0 x 10³ Ω·m, besonders bevorzugt von maximal 4,0 x 10³ Ω·m, aufweist. Dies trägt ferner zu einer insgesamt verbesserten Reifenleitfähigkeit bei.

Eine die Rissbeständigkeit des Gummimaterials des Laufstreifens verbessernde Maßnahme sieht vor, dass das elektrisch leitende Gummimaterial des Laufstreifenteils bzw. der Laufstreifenteile
- einen Spannungswert bei 100% Dehnung, ermittelt bei einer Temperatur von 23°C sowie gemäß DIN 53504, von mindestens 3,0 MPa,
- einen Spannungswert bei 200% Dehnung, ermittelt bei einer Temperatur von 23°C sowie gemäß DIN 53504, von mindestens 8,0 MPa und
- einen Spannungswert bei 300% Dehnung, ermittelt bei einer Temperatur von 23°C sowie gemäß DIN 53504, von mindestens 13,5 MPa aufweist.

Ein solches Gummimaterial weist somit eine entsprechend spezifische Spannungs-Dehnungs-Kurve auf.

Eine besonders vorteilhafte Lösung im Hinblick auf den erwähnten Zielkonflikt wird erzielt, wenn die dem elektrisch leitenden Gummimaterial des Laufstreifenteils bzw. der Laufstreifenteile zugrundeliegende Kautschukmischung Acetylenruß(e) in einer Gesamtmenge von 25,0 phr bis 60,0 phr, insbesondere von bis zu 55,0 phr, bevorzugt von 30,0 phr bis 50,0 phr, enthält, wobei es bevorzugt ist, wenn die Kautschukmischung entweder keinen Ruß enthält, welcher kein Acetylenruß ist oder wenn die Kautschukmischung Ruß(e), welcher kein Acetylenruß ist bzw. welche jeweils kein Acetylenruß sind, in einer Gesamtmenge von bis zu 20,0 phr, insbesondere von bis zu 15,0 phr, enthält.

Ferner hat sich überraschender Weise herausgestellt, dass der Einsatz eines spezifischen Acetylenrußes bzw. der Einsatz mehrerer spezifischer Acetylenruße im Hinblick auf den zu lösenden Zielkonflikt besonders gut geeignet ist bzw. sind. Dieser bzw. diese Acetylenruß(e) weist bzw. weisen folgende Rußkennzahlen auf:
a) Ölabsorptionszahl (24M4-DBP-Zahl) nach ASTM D2414-22
   - von 180 ml / 100 g bis 350 ml / 100 g,
   - insbesondere von 230 ml / 100 g bis 320 ml / 100 g,
   - vorzugsweise von 240 ml / 100 g bis 310 ml / 100 g,
   - bevorzugt von 250 ml / 100 g bis 280 ml / 100 g.
b) Jodadsorptionszahl nach ISO 1304
   - von 70 mg (Jod) / g bis 90 mg (Jod) / g,
   - insbesondere von 75 mg (Jod) / g bis 85 mg (Jod) / g,
   - vorzugsweise von 78 mg (Jod) / g bis 82 mg (Jod) / g,
c) Stickstoffadsorptionszahl (STSA Oberfläche) nach ASTM D 6556-21
   - von 50 m² / g bis 70 m² / g,
   - insbesondere von 55 m² / g bis 65 m² / g,
   - vorzugsweise von 58 m² / g bis 63 m² / g.

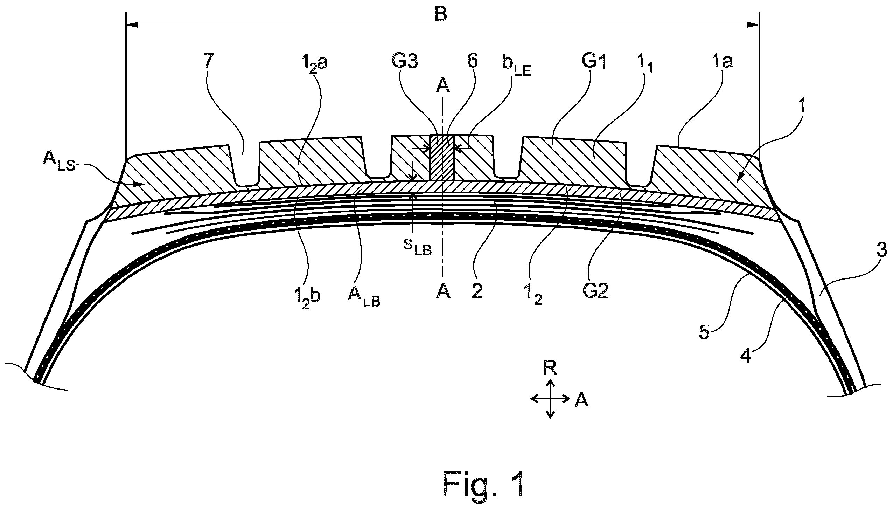

Weitere Merkmale, Vorteile und Einzelheiten der Erfindung werden nun anhand der einzigen Figur, Fig. 1, die schematisch einen Teilquerschnitt durch einen Nutzfahrzeugreifen im Bereich des Laufstreifens und des Gürtelverbands mit einem Ausführungsbeispiel der Erfindung zeigt, näher erläutert.

Die Erfindung befasst sich mit einem Fahrzeugreifen mit einem Laufstreifen aus mehreren Laufstreifenteilen aus spezifischen Gummimaterialien (Vulkanisate von Kautschukmischungen). Nachfolgend wird allgemein auf den Fahrzeugreifen (Punkt 1), einen Ableitweg (Punkt 2), die geometrische Ausgestaltung des Laufstreifens (Punkt 3), die Gummimaterialien der Laufstreifenteile (Punkt 4) und auf weitere Ausführungsbeispiele (Punkt 5) eingegangen.

### 1. Allgemeine Beschreibung des Fahrzeugreifens

Gemäß der Erfindung ausgeführte Fahrzeugreifen sind Reifen für mehrspurige Kraftfahrzeuge, insbesondere für Personenkraftwagen (PKWs), Vans (Transporter), SUVs oder Nutzfahrzeuge, vorzugsweise für LKWs oder Busse. Die Fahrzeugreifen sind vorzugsweise Fahrzeugluftreifen, besonders bevorzugt Fahrzeugluftreifen in Radialbauart. Die PKW-, Van- und SUV-Reifen sind insbesondere für Felgen mit einem ganzzahligen Felgendurchmesser von 13 Zoll bis 24 Zoll vorgesehen und weisen einen Traglastindex von insbesondere 71 bis 126 auf. Die Nutzfahrzeugreifen sind insbesondere für Felgen mit einem Felgendurchmesser von 17,5 Zoll bis 24,5 Zoll vorgesehen und weisen einen Traglastindex von insbesondere > 126, vorzugsweise von ≥ 144, bevorzugt ≥ 152, besonders bevorzugt ≥ 156, mehr bevorzugt ≥ 160, noch mehr bevorzugt ≥ 164, auf.

Fig. 1 zeigt einen Teilquerschnitt eines Nutzfahrzeugreifens. Die radiale Richtung ist durch einen Doppelpfeil R, die axiale Richtung ist durch einen Doppelpfeil A und die Reifenäquatorialebene ist durch eine Linie A-A angedeutet. Unter der "axialen Richtung" wird die senkrecht zur Reifenäquatorialebene verlaufende Richtung verstanden. Unter der "radialen Richtung" wird die im in axialer Richtung ausgerichteten Querschnitt parallel zur Reifenäquatorialebene verlaufende Richtung verstanden. "Reifenquerschnitt" bezeichnet, den von der axialen Richtung und der radialen Richtung aufgespannten Querschnitt.

Der Nutzfahrzeugreifen weist einen profilierten Laufstreifen 1, einen beim Ausführungsbeispiel vierlagigen Gürtelverband 2, Seitenwände 3, eine Karkasseinlage 4 und eine Innenschicht 5 auf. In jedem Schulterbereich ist vorzugsweise eine in insbesondere bekannter Weise gestaltete Schulterpolsterung, welche beispielsweise einen oder mehrere Schulter- und/oder Gürtelkantenpolster umfasst, vorgesehen. Sämtlich der genannten Bauteile sind in Umfangsrichtung umlaufende Bauteile.

Der Gürtelverband 2, die Seitenwände 3, die Karkasseinlage 4, die Innenschicht 5 sowie die nicht gezeigten Wulstbereiche können in an sich bekannter Weise ausgeführt sein.

### 2. Zum Ableitweg

Der Nutzfahrzeugreifen weist einen Ableitweg zur Ableitung der beim Fahren auftretenden elektrostatischen Aufladungen vom Fahrzeug, insbesondere von der Karosserie, zum jeweiligen Untergrund ("Erdung") auf. Zum Ableitweg gehören zumindest ein Laufstreifenelement 6 aus einem speziellen, elektrisch leitenden Gummimaterial und eine Laufstreifenbase 1₂ aus einem speziellen, elektrisch leitenden Gummimaterial, wie nachfolgend noch genauer ausgeführt wird (siehe Punkt 4). Zum Ableitweg gehören ferner eine elektrisch leitende Seitenwand/Hornprofilpassage, welche die Laufstreifenbase 1₂ kontaktiert. Die elektrisch leitende Passage bestehet aus einem elektrisch leitenden Material, beispielsweise aus einem elektrisch leitenden Gummimaterial, einem elektrisch leitenden Gewebe oder ist eine mittels einer Suspension gebildete, elektrisch leitende einvulkanisierte Schicht und kann in an sich bekannter Weise ausgeführt sein.

### 3. Zur geometrischen Ausgestaltung des Laufstreifens 1

Der Laufstreifen 1 weist eine in der Laufstreifenperipherie liegende Laufstreifenaußenfläche 1a und, im Reifenquerschnitt betrachtet, eine Querschnittsfläche A_{LS} auf. Der Laufstreifen 1 setzt sich in radialer Richtung aus einer die Laufstreifenaußenfläche 1a mitbildenden Laufstreifencap 1₁ aus einem Gummimaterial G1 und einer radial innerhalb von dieser ausgebildeten Laufstreifenbase 1₂ aus einem Gummimaterial G2, welches vom Gummimaterial G1 abweicht, zusammen. Bevorzugt ist in der Laufstreifencap 1₁ die komplette Profilierung des Laufstreifens 1 enthalten, wobei zur Profilierung des Laufstreifens 1 beim Ausführungsbeispiel vier auf die jeweils vorgesehene Profiltiefe ausgeführte Umfangsrillen 7 gehören. Folglich reicht die Profilierung bevorzugt nicht in die Laufstreifenbase 1₂ hinein.

Die Laufstreifenbase 1₂ weist eine an der Laufstreifencap 1₁ liegende, von der Laufstreifenaußenfläche 1a beabstandete Baseaußenseite 1₂a, eine dem Gürtelverband 2 zugewandte Baseinnenseite 1₂b, eine zwischen der Baseaußenseite 1₂a und der Baseinnenseite 1₂b an der dicksten Stelle als kleinstmöglicher Abstand ermittelte, maximale Stärke s_{LB} (Stärke an der stärksten Stelle) von mindestens 2,0 mm, insbesondere mindestens 3,0 mm, bevorzugt mindestens 4,0 mm, besonders bevorzugt mindestens 6,0 mm, mehr bevorzugt von mindestens 10,0 mm, am meisten bevorzugt mindestens 12,0 mm, und im Reifenquerschnitt eine Querschnittsfläche A_{LB} mit einem Flächeninhalt von mindestens 15%, insbesondere von mindestes 20%, vorzugsweise von mindestens 25%, bevorzugt von mindestens 30%, besonders bevorzugt von mindestens 35%, am meisten bevorzugt von mindestes 40%, des Flächeninhalts der Querschnittsfläche A_{LS} Laufstreifens 1 auf.

In der Laufstreifencap 1₁ ist im Bereich der Bodenaufstandsfläche, beim Ausführungsbeispiel im Bereich der Reifenäquatorialebene (Linie A-A), zumindest eines der bereits erwähnten, elektrisch leitenden Laufstreifenelemente 6 integriert, welches die Laufstreifencap 1₁ in radialer Richtung durchsetzt, sich bis zur Laufstreifenaußenfläche 1a erstreckt, die Laufstreifenbase 1₂ kontaktiert und aus einem vom Gummimaterial G1 abweichenden Gummimaterial G3 besteht, wobei insbesondere ein einziges, elektrisch leitendes Laufstreifenelement 6 in Form eines sogenannten Carbon-Center-Beams vorgesehen ist, welcher ein in Umfangsrichtung umlaufender, elektrisch leitender Gummistreifen ist. Bei mehreren elektrisch leitenden Laufstreifenelementen 6 sind diese vorzugsweise derart über den Reifenumfang verteilt, dass sich beim Abrollen des Reifens jeweils zumindest eines der Laufstreifenelemente 6 im Bereich des Footprints befindet. Besonders bevorzugt stimmt das Gummimaterial G3 des Laufstreifenelements 6 bzw. der Laufstreifenelemente 6 mit dem Gummimaterial G2 der Laufstreifenbase 1₂ überein. Das Gummimaterial G2 kann vom Gummimaterial G3 jedoch auch abweichen.

Das bzw. jedes Laufstreifenelement 6 weist, im Reifenquerschnitt betrachtet, in axialer Richtung eine maximale Breite b_{LE} (Breite an der breitesten Stelle) auf, welche höchstens 40,0 mm, insbesondere höchstens 20,0 mm, vorzugsweise höchstens 10,0 mm, bevorzugt höchstens 8,0 mm, besonders bevorzugt 2,0 mm bis 6,0 mm, am meisten bevorzugt 1,0 mm bis 4,0 mm, beträgt.

### 4. Zu den Gummimaterialien G1, G2, G3

Das Gummimaterial G1 der Laufstreifencap 1₁ ist elektrisch nicht leitend und kann in insbesondere bekannter Weise ausgeführt sein (zur Definition von "elektrisch leitend" siehe Punkt 4.5).

Das Gummimaterial G2 der Laufstreifenbase 1₂ und das Gummimaterial G3 des bzw. jedes Laufstreifenelements 6 sind elektrisch leitend und im Hinblick auf ihren Beitrag zum Rollwiderstand des Fahrzeugreifens optimiert, sodass diese möglichst wenig zum Rollwiderstand beitragen, sowie ferner bezüglich ihrer Rissbeständigkeit und der Tragfähigkeit des Reifens vorteilhaft ausgelegt.

Tabelle 1 zeigt beispielhaft vereinfachte Rezepte für Kautschukmischungen R, E_{A}, E_{B}, also Zusammensetzungen von Kautschukmischungen R, E_{A}, E_{B}.

Kautschukmischung R ist eine Referenzkautschukmischung für eine Laufstreifenbase aus einem üblichen Gummimaterial G (R). Die Gummimaterialien G2, G3 sind unabhängig voneinander jeweils aus einer der Kautschukmischungen E_{A}, E_{B} gefertigt und nachfolgend als G2 (E_{A}), G3 (E_{A}), G2 (Es), G3 (E_{B}) bezeichnet. Die Rezepte der Kautschukmischungen R, E_{A}, Es sind - wie in der Kautschuktechnologie üblich - auf 100 Teile Kautschuk (phr = parts per hundred parts rubber) bezogen. Die Mengenangaben beziehen sich daher jeweils auf 100 Massenteile des Grundpolymers, also des Kautschuks, bzw. bei Polymerblends, welche bei den Rezepten jedoch nicht vorgesehen sind, auf 100 Massenteile der Grundpolymere, also der Kautschuke.

**Tabelle 1: Rezepte (Beispiele)**

| **Bestandteil** | **Einheit** | **R** | **E_{A}** | **E_{B}** |
|---|---|---|---|---|
| Naturkautschuk | phr | 100,0 | 100,0 | 100,0 |
| Ruß Typ A | | 45,0 | - | 15,0 |
| Ruß Typ B | | - | 45,0 | 30,0 |
| Antioxidantien | | 4,5 | 4,5 | 4,5 |
| Vulkanisationssystem | | 8,5 | 8,5 | 8,5 |

Zu den Antioxidantien gehören beispielsweise Alterungsschutz, UV-Schutz oder Ozonschutzmittel.

Zum Vulkanisationssystem gehören insbesondere Schwefel, Beschleuniger sowie Aktivatoren (Zinkoxid, Stearinsäure).

Tabelle 2 zeigt Eigenschaften (Rußkennzahlen) vom Ruß Typ A sowie vom Ruß Typ B. Ruß Typ B ist ein mittels des Acetylenruß-Verfahrens hergestellter Ruß, also ein Acetylenruß. Ruß Typ A ist kein Acetylenruß und beispielsweise ein mittels thermisch-oxidativer Spaltung hergestellter Ruß, etwa ein nach dem Furnace-Verfahren hergestellter Ruß.

**Tabelle 2: Rußkennzahlen**

| **Eigenschaften der Ruße** | **Norm** | **Einheit** | **Ruß Typ A** | **Ruß Typ B** |
|---|---|---|---|---|
| ***Struktur*** | | | | |
| Ölabsorptionszahl (24M4-DBP-Zahl) | ASTM D2414-22 | ml / 100 g | 173 | 265 |

| ***Oberflächenbestimmung*** | | | | |
|---|---|---|---|---|
| Jodadsorptionszahl | ISO 1304 (Ausgabe 2016-10) | mg (Jod) / g | 83 | 80 |
| Stickstoffadsorptionszahl (STSA Oberfläche) | ASTM D 6556-21 | m² / g | 78 | 61 |

| ***Nachhaltigkeit*** | | | | |
|---|---|---|---|---|
| Anfallende Menge CO2 bei Herstellung | | kg CO2 / 1t Ruß | ~5000 | ∼ 100 |

Wie sich aus Tabelle 2 ergibt, trägt der Einsatz von Ruß Typ B in der bzw. den Kautschukmischung(en) der Gummimaterialien G2, G3 zu einer nachhaltigen Reifenfertigung bei (reduzierte Menge an anfallendem CO₂ gegenüber Ruß Typ A).

Nachfolgend wird auf Vulkanisateigenschaften der Gummimaterialien G (R), G2 (E_{A}), G3 (E_{A}), G2 (Es), G3 (E_{B}) eingegangen, wobei Vulkanisateigenschaften angeführt sind, welche Indikatoren für den zu erwartenden Beitrag zum Rollwiderstand (Rollwiderstandsindikatoren, Punkt 4.1), den Einfluss auf die zu erwartende Reifentragfähigkeit (Tragfähigkeitsindikatoren, Punkt 4.2), die zu erwartende Rissbeständigkeit (Rissbeständigkeitsindikatoren, Punkt 4.3) und die zu erwartende elektrische Leitfähigkeit (Leitfähigkeitsindikator, Punkt 4.4) sind.

### 4. 1 Indikatoren für den Rollwiderstand (Rollwiderstandsindikatoren)

Als primäre Rollwiderstandsindikatoren werden die Rückprallelastizität bei einer Temperatur von 23°C und bei einer Temperatur von 70°C, jeweils ermittelt gemäß ISO 4662, herangezogen (nachfolgend als "Rückprallelastizität R (23°C)" bzw. "Rückprallelastizität R (70°C)" bezeichnet"). Als sekundärer (ergänzender) Rollwiderstandsindikator wird der Verlustfaktor tan d bei einer Temperatur von 70°C, ermittelt nach ISO 4661-1, herangezogen (nachfolgend als "Verlustfaktor tan d (70°C)" bezeichnet).

Der zu erwartende Rollwiderstand ist umso besser (geringer), je größer die Rückprallelastizität R (23°C) bzw. Rückprallelastizität R (70°C) und je kleiner der Verlustfaktor tan d (70°C) ist. Für einen geringen Rollwiderstand ist es bekannterweise erforderlich, dass beim Abrollen des Reifens möglichst wenig Energie in Wärme umgewandelt wird.

Die Rollwiderstandsindikatoren wurden wie nachfolgend erläutert ermittelt:
Rückprallelastizität R (23°C) bzw. R (70°C):
   Ermittlung nach ISO 4662:
   - Elastomere oder thermoplastische Elastomere - Bestimmung der Rückprallelastizität von Vulkanisaten
   - Ausgabe 2017-06
   - Pendulum method gemäß Abschnitt 5,
   - Dicke der Prüfkörper: 6,3 mm ± 0,3 mm (vergl. Annex A (Use of non-standard test pieces)),
   - Vulkanisationsparameter (Herstellung der Prüfkörper):
      o Vulkanisationstemperatur: 140°C
      o Vulkanisationszeit: 30 Minuten
      o Vulkanisation unter Druck
   - Messparameter:
      o Temperierzeit: 30 Minuten
      o Temperatur:
         - R (23°C): 23°C ± 2°C
         - R (70°C): 70°C ± 2°C
Verlustfaktor tan d (70°C):
   Ermittlung nach ISO 4664-1:
   - Elastomere oder thermoplastische Elastomere - Bestimmung der dynamischen Eigenschaften - Teil 1: Grundsätze
   - Ausgabe 2022-07
   - Vulkanisationsparameter (Herstellung der Prüfkörper):
      ∘ Vulkanisationstemperatur: 140°C
      ∘ Vulkanisationszeit: 30 Minuten
      ∘ Vulkanisation unter Druck
   - Messparameter:
      ∘ Messfrequenz:10 Hz
      ∘ Vorkraft: 50 N
      ∘ Amplitudenkraft: 30 N
      ∘ Temperierzeit: 5 Minuten
      ∘ Temperatur: 70°C ± 1°C (Temperaturdurchlauf)
      ∘ Messwertaufnahme: Nach 30 Sekunden Prüfzeit

### 4.2 Indikatoren für die Reifentragfähigkeit (Tragfähigkeitsindikatoren)

Als Tragfähigkeitsindikatoren werden die Shore-Härten-A bei 23°C (nachfolgend Shore-Härte-A (23°C)) und bei 70°C (nachfolgend Shore-Härte-A (70°C)), jeweils ermittelt gemäß DIN EN ISO 868, herangezogen. Diese Shore-Härten-A stehen im Zusammenhang mit der strukturellen Haltbarkeit des Kronenbereichs des Fahrzeugreifens und zeigen in der Folge Auswirkungen auf die Reifentragfähigkeit. Eine größere Shore-Härte-A (23°C) und eine größere Shore-Härte-A (70°C) trägt zu einer hohen Reifentragfähigkeit bei.

Die Tragfähigkeitsindikatoren (Shore-Härte-A (23°C), Shore-Härte-A (70°C)) wurden wie nachfolgend angeführt ermittelt:
Ermittlung nach DIN EN ISO 868:
- Kunststoffe und Hartgummi - Bestimmung der Eindruckhärte mit einem Durometer (Shore-Härte) (ISO 868:2003); Deutsche Fassung EN ISO 868:2003
- Ausgabe 2003-10
- Vulkanisationsparameter (Herstellung der Prüfkörper):
   o Vulkanisationstemperatur: 140°C
   o Vulkanisationszeit: 30 Minuten
   o Vulkanisation unter Druck
- Messparameter:
   o Temperierzeit: 30 Minuten
   o Temperatur:
      - Shore-Härte-A (23°C)): 23°C ± 2°C
      - Shore-Härte-A (70°C)): 70°C ± 2°C
   o Messdauer (Haltezeit): 15 Sekunden

### 4.3 Indikatoren für die Rissbeständigkeit (Rissbeständigkeitsindikatoren)

Als Rissbeständigkeitsindikatoren werden die Spannungswerte bei 100% Dehnung (nachfolgend als Spannungswert σ (100%) bezeichnet), bei 200% Dehnung (nachfolgend als Spannungswert σ (200%) bezeichnet) und bei 300% Dehnung (nachfolgend als Spannungswert σ (300%) bezeichnet), jeweils ermittelt bei einer Temperatur von 23°C sowie gemäß DIN 53504, herangezogen. Höhere Spannungswerte σ (100%), σ (200%), σ (300%) lassen eine bessere Rissbeständigkeit erwarten.

Die Rissbeständigkeitsindikatoren (Spannungswert σ (100%), Spannungswert σ (200%) Spannungswert σ (300%)) wurden wie folgt ermittelt:
Ermittlung nach DIN 53504:
- Prüfung von Kautschuk und Elastomeren - Bestimmung von Reißfestigkeit, Zugfestigkeit, Reißdehnung und Spannungswerten im Zugversuch
- Ausgabe 2017-03
- Vulkanisationsparameter (Herstellung der Prüfkörper):
   o Vulkanisationstemperatur: 140°C
   o Vulkanisationszeit: 30 Minuten
   o Vulkanisation unter Druck
- Messparameter:
   o Temperatur: 23°C ± 2°C

### 4. 4 Indikator für die elektrische Leitfähigkeit (Leitfähigkeitsindikator)

Als Leitfähigkeitsindikator dient der spezifische elektrische Widerstand (spezifischer Durchgangswiderstand), welcher rechnerisch aus einem zuvor gemessenen elektrischen Widerstand (gemessener Durchgangswiderstand: Widerstand eines Materials gegen den Stromdurchfluss) ermittelt wurde.

Die Messung des elektrischen Widerstands (R [Ω]) erfolgte mit einem Gleichstrommessgerät mit zwei Metallelektroden (Fluke 1507 Isolationsprüfgerät mit einem Prüfbereich von 1 · 10⁴ bis 1 · 10¹⁰ Ohm) und einem definierten vulkanisierten Prüfkörper sowie in einem klimatisierten Prüflabor (23°C).

Der Prüfkörper wies folgende Geometrie auf:
- Kreiszylindrischer Prüfkörper (Prüfkörper in Form eines geraden Kreiszylinders)
- Durchmesser: 44,6 mm
- Dicke (Höhe, Stärke): 6,3 mm

Der Prüfkörper wurde unter folgenden Vulkanisationsparametern hergestellt (vulkanisiert):
- Vulkanisationstemperatur: 140°C
- Vulkanisationszeit: 30 Minuten

Zur Messung des elektrischen Widerstands (R [Ω]) wurde der Prüfkörper flächig zwischen zwei Metallelektroden (kreiszylindrische Metallelektroden mit einem Durchmesser von 44,6 mm) aufgenommen, welche zur Aufnahme des Prüfkörpers mit einer Kraft von 10N gegeneinander belastet wurden. Die kreiszylindrischen Metallelektroden sind daher an die Kreisflächen des kreiszylindrischen Prüfkörpers angedrückt.

Nach erfolgter Messung des elektrischen Widerstands (R [Ω]) wurde der spezifische elektrische Widerstand gemäß folgender Gleichung rechnerisch ermittelt: ${R}_{Spec .} \left[Ω⋅m\right] = R \left[Ω\right] ⋅ \left(S \left[{m}^{2}\right]/T \left[m\right]\right)$
- R_{Spec.} [Ω·m]: Spezifischer elektrischer Widerstand in der Einheit Ohm x Meter
- R [Ω]: Gemessener elektrischer Widerstand in der Einheit Ohm
- S [m²]: Messfläche des Prüfkörpers (= Größe einer (einzigen) Kreisfläche) in der Einheit Quadratmeter
- T [m]: Dicke des Prüfkörpers in der Einheit Meter

### 4.5 Vulkanisateigenschaften der Gummimaterialien G2, G3 (Ausführungsbeispiele)

Die Tabellen 3 bis 6 zeigen die Werte für die Rollwiderstandsindikatoren, die Tragfähigkeitsindikatoren, die Rissbeständigkeitsindikatoren und den Leitfähigkeitsindikator der Gummimaterialien G (R), G2 (E_{A}), G3 (E_{A}), G2 (Es), G3 (E_{B}).

**Tabelle 3: Rollwiderstandsindikatoren**

| **Rollwiderstandsindikatoren** | **Norm** | **Dimension** | **G (R)** | **G2 (EA)** | **G2 (EB)** |
|---|---|---|---|---|---|
| | | | | **G3 (EA)** | **G3 (EB)** |
| *Primäre Rollwiderstandsind.* | | | | | |
| Rückprallelastizität R (23°C) | ISO 4662 | % | 53,2 | 59,1 | 56,5 |
| Rückprallelastizität R (70°C) | | | 65,8 | 70,5 | 67,2 |
| *Sekundärer Rollwiderstandsind.* | | | | | |
| Verlustfaktor tan d (70 °C) | ISO 4664-1 | - | 0,058 | 0,047 | 0,051 |

Gemäß Tabelle 3 weisen die Gummimaterialien G2 (E_{A}), G3 (E_{A}), G2 (Es), G3 (E_{B}) - jeweils gegenüber dem Gummimaterial G (R) - höhere Rückprallelastizitäten R (23°C), R (70°C) sowie einen geringen Verlustfaktor tan d (70°C) auf, sodass bei einem Fahrzeugreifen mit dem Laufstreifen 1 mit einer Laufstreifenbase 1₂ aus einem der Gummimaterialien G2 (E_{A}), G2 (E_{B}) und/oder einem bzw. mehreren elektrisch leitenden Element(en) 6 aus einem der Gummimaterialien G3 (E_{A}), G3 (E_{B}) der von der Laufstreifenbase 1₂ bzw. dem oder den Element(en) 6 zu erwartende Beitrag zum Rollwiderstand des Fahrzugreifens geringer ist als bei einem Fahrzeugreifen mit einem Laufstreifen 1 mit einer Laufstreifenbase 1₂ aus dem Gummimaterial G (R) bzw. einem bzw. mehreren elektrisch leitenden Element(en) 6 aus dem Gummimaterial G (R). Folglich ist ein Fahrzeugreifen mit einem geringen Rollwiderstand zu erwarten.

**Tabelle 4: Tragfähigkeitsindikatoren**

| **Tragfähigkeitsindikatoren** | **Norm** | **Dimension** | **G (R)** | **G2 (EA)** | **G2 (EB)** |
|---|---|---|---|---|---|
| | | | | **G3 (EA)** | **G3 (EB)** |
| Shore-Härte A (23°C) | DIN EN ISO 868 | ShA (Shore A) | 66,6 | 65,1 | 62,9 |
| Shore-Härte A (70°C) | | | 62,9 | 61,9 | 59,2 |

Wie Tabelle 4 zu entnehmen ist, weisen die Gummimaterialien G2 (E_{A}), G3 (E_{A}), G2 (Es), G3 (E_{B}) unter Berücksichtigung der üblichen Schwankungsbreiten eine zum Gummimaterial G (R) im Wesentlichen unverändert hohe Shore-Härte A (23°C) und Shore-Härte A (70°C) auf, sodass ein Nutzfahrzeugreifen mit weiterhin guter Tragfähigkeit zu erwarten ist.

**Tabelle 5: Rissbeständigkeitsindikatoren**

| **Rissbeständigkeitsindikatoren** | **Norm** | **Dimension** | **G (R)** | **G2 (EA)** | **G2 (EB)** |
|---|---|---|---|---|---|
| | | | | **G3 (EA)** | **G3 (EB)** |
| Spannungswert σ (100%) | DIN 53504 | MPa | 3,9 | 3,6 | 3,1 |
| Spannungswert σ (200%) | | | 11,2 | 9,0 | 8,4 |
| Spannungswert σ (300%) | | | 18,5 | 14,8 | 14,3 |

Gemäß Tabelle 5 weisen die Gummimaterialien G2 (E_{A}), G3 (E_{A}), G2 (Es), G3 (E_{B}) unter Berücksichtigung der üblichen Schwankungsbreiten gegenüber dem Gummimaterial G (R) nur geringfügig geringere Spannungswerte σ (100%), σ (200%), σ (300%) auf, sodass weiterhin eine gute Rissbeständigkeit zu erwarten ist. Die gegebenenfalls etwas nachlassende Rissbeständigkeit der Gummimaterialien G2 (E_{A}), G3 (E_{A}), G2 (Es), G3 (E_{B}) gegenüber dem Gummimaterial G (R) ist unproblematisch, da vorwiegend das bzw. die entsprechend schmale(n), elektrisch leitende(n) Laufstreifenelement(e) 6 und nicht die von Gummimaterial G1 der Laufstreifencap 1₁ überdeckte Laufstreifenbase 1₂b mit dem Untergrund in Kontakt tritt bzw. treten.

**Tabelle 6: Leitfähigkeitsindikator**

| **Leitfähigkeitsindikator** | **Norm** | **Dimension** | **G (R)** | **G2 (EA)** | **G2 (EB)** |
|---|---|---|---|---|---|
| | | | | **G3 (EA)** | **G3 (EB)** |
| Spezifischer elektrischer Widerstand | - | Ohm*m | 4,7E+03 | 2,6E+03 | 3,4E+03 |

Wie Tabelle 6 zeigt, ist der spezifische elektrische Widerstand der Gummimaterialien G2 (E_{A}), G3 (E_{A}), G2 (E_{B}) deutlich geringer als jener des Gummimaterials G (R). Folglich ist ein Nutzfahrzeugreifen zu erwarten, bei welchem - wie bereits erwähnt (siehe Punkt 2 oben) - der Ableitweg unter Beteiligung des Laufstreifenelements 6 bzw. der Laufstreifenelemente 6 und der Laufstreifenbase 1₂ problemlos realisierbar ist.

Unter einem elektrisch leitenden Gummimaterial wird im Rahmen der gegenständlichen Erfindung ein solches verstanden, welches einen spezifischen elektrischen Widerstand von ≤ 10⁸ Ω·cm (= 10⁶ Ω·m) aufweist.

### 4.6 Zur Kautschukmischung und den Vulkanisateigenschaften der

### Gummimaterialien G2, G3 (Verallgemeinerung)

Die den Gummimaterialien G2, G3 zugrundeliegende Kautschukmischung enthält Acetylenruß(e) in einer Gesamtmenge (Menge des Acetylenrußes bzw. Menge sämtlicher Acetylenruße) von 25,0 phr bis 60,0 phr, insbesondere von bis zu 55,0 phr, bevorzugt von 30,0 phr bis 50,0 phr. Zusätzlich kann die den Gummimaterialien G2, G3 zugrundeliegende Kautschukmischung Ruß(e), welche(r) kein bzw. keine Acetylenruß(e) ist bzw. sind, in einer Gesamtmenge von bis zu 20,0 phr, insbesondere von bis zu 15,0 phr, enthalten.

Der bzw. die Acetylenruß(e) weist bzw. weisen jeweils folgende Rußkennzahlen auf:
a) Ölabsorptionszahl (24M4-DBP-Zahl):

| | |
|---|---|
| | 180 ml / 100 g bis 350 ml / 100 g, |
| insbesondere | 230 ml / 100 g bis 320 ml / 100 g, |
| vorzugsweise | 240 ml / 100 g bis 310 ml / 100 g, |
| bevorzugt | 250 ml / 100 g bis 280 ml / 100 g. |

b) Jodadsorptionszahl:

| | |
|---|---|
| | 70 mg (Jod) / g bis 90 mg (Jod) / g, |
| insbesondere | 75 mg (Jod) / g bis 85 mg (Jod) / g, |
| vorzugsweise | 78 mg (Jod) / g bis 82 mg (Jod) / g. |

c) Stickstoffadsorptionszahl (STSA Oberfläche):

| | |
|---|---|
| 50 m² / g bis 70 m² / g, | |
| insbesondere | 55 m² / g bis 65 m² / g, |
| vorzugsweise | 58 m² / g bis 63 m² / g. |

Das Gummimaterial G2 der Laufstreifenbase 1₂ und das Gummimaterial G3 des Laufstreifenelements 6 bzw. der Laufstreifenelemente 6 weist für die unter Punkt 4.5 angeführten Vulkanisateigenschaften (Indikatoren) grundsätzlich folgende Werte auf:

| | |
|---|---|
| - Rückprallelastizität R (23°C) = | mindestens 54,0%, |
| | insbesondere mindestens 56,0%, |
| | vorzugsweise mindestens 58,0% |
| - Rückprallelastizität R (70°C) = | mindestens 65,0%, |
| | insbesondere mindestens 67,0%, |
| | vorzugsweise mindestens 70,0% |
| - Verlustfaktor tan d (70°C) = | maximal 0,065, |
| | insbesondere maximal 0,055 |
| - Shore-Härte-A (23°C) = | mindestens 61,0 ShA, |
| | insbesondere mindestens 62,0 ShA, |
| | vorzugsweise mindestens 64,0 ShA, |
| | bevorzugt mindestens 65,0 ShA |
| - Shore-Härte-A (70°C) = | mindestens 58,5 ShA, |
| | insbesondere mindestens 60,0 ShA, |
| | vorzugsweise mindestens 61,5 ShA, |
| | bevorzugt mindestens 62,0 ShA |
| - Spannungswert σ (100%) = | mindestens 3,0 MPa |
| - Spannungswert σ (200%) = | mindestens 8,0 MPa |
| - Spannungswert σ (300%) = | mindestens 13,5 MPa |
| - Spezifischer elektrischer Widerstand = | maximal 1,0 x 10⁶ Ω·m, insbesondere maximal 1,0 x 10⁵ Ω·m, vorzugsweise maximal 1,0 x 10⁴ Ω·m, bevorzugt maximal 5,0 x 10³ Ω·m, besonders bevorzugt maximal 4,0 x 10³ Ω·m |

### 5. Weitere Ausführungsformen

Die Erfindung ist auf das beschriebene Ausführungsbeispiel nicht beschränkt.

Der Laufstreifen weist zumindest einen Laufstreifenteil aus einem entsprechend ausgeführten Gummimaterial auf. Dieser Laufstreifenteil ist bevorzugt eine radial innerste Laufstreifenschicht oder ein den Laufstreifen in radialer Richtung durchsetzendes Laufstreifenelement.

Bei Reifen, welche keine Nutzfahrzeugreifen sind, weist der Gürtelverband üblicherweise zwei Gürtellagen auf und es sind bevorzugt keine Gürtelkantenpolster und Schulterpolster vorgesehen.

### Bezugszeichenliste

- 1: Laufstreifen
- 1a: Laufstreifenaußenfläche
- 1₁: Laufstreifencap
- 1₂: Laufstreifenbase
- 1₂a: Baseaußenseite
- 1₂b: Baseinnenseite
- 2: Gürtelverband
- 3: Seitenwand
- 4: Karkasseinlage
- 5: Innenschicht
- 6: Laufstreifenelement
- 7: Umfangsrille
- A: Doppelpfeil (axiale Richtung)
- A_{LB}, A_{LB}: Querschnittsfläche
- A-A: Linie (Reifenäquatorialebene)
- b_{LE}: maximale Breite
- G₁, G₂, G₃: Gummimaterial
- R: Doppelpfeil (radial Richtung)
- s_{LB}: maximale Stärke

## Patentansprüche

1. Fahrzeugreifen, insbesondere Nutzfahrzeugreifen, mit einem profilierten Laufstreifen (1) mit einem oder mehreren Laufstreifenteil(en) (1₂, 6), welcher bzw. welche jeweils aus einer Acetylenruß(e) enthaltenden Kautschukmischung hergestellt ist bzw. sind und aus einem Gummimaterial (G2, G3) besteht bzw. bestehen, wobei der Fahrzeugreifen einen Ableitweg zur Ableitung elektrostatischer Aufladungen aufweist,
**dadurch gekennzeichnet,**
**dass** das Gummimaterial (G2, G3) des Laufstreifenteils (1₂, 6) bzw. der Laufstreifenteile (1₂, 6), welcher bzw. welche jeweils aus einer Acetylenruß(e) enthaltenden Kautschukmischung gefertigt ist bzw. sind, integraler Bestandteil des Ableitwegs zur Ableitung elektrostatischer Aufladungen ist,
wobei das Gummimaterial (G2, G3)
eine Rückprallelastizität, ermittelt nach ISO 4662 bei einer Temperatur von 23°C (R (23°C)), von mindestens 54,0%,
eine Rückprallelastizität, ermittelt nach ISO 4662 bei einer Temperatur von 70°C (R (70°C)), von mindestens 65,0% sowie
einen spezifischen elektrischen Widerstand von maximal 1,0 x 10⁶ Ω·m aufweist.

2. Fahrzeugreifen nach Anspruch 1, **dadurch gekennzeichnet, dass** als Laufstreifenteil (1₂, 6), welcher integraler Bestandteil des Ableitwegs ist, eine im Reifenquerschnitt in axialer Richtung langgestreckte, radial innerste Laufstreifenschicht (1₂) vorgesehen ist, welche insbesondere über die komplette in axialer Richtung ermittelte Breite des Laufstreifens (1) verläuft.

3. Fahrzeugreifen nach Anspruch 2, **dadurch gekennzeichnet, dass** die Laufstreifenschicht (1₂) an der dicksten Stelle in radialer Richtung eine maximale Stärke (s_{LB}) von mindestens 2,0 mm, insbesondere von mindestens 3,0 mm, bevorzugt von mindestens 4,0 mm, besonders bevorzugt von mindestens 6,0 mm, mehr bevorzugt von mindestens 10,0 mm, am meisten bevorzugt von mindestens 12,0 mm, aufweist.

4. Fahrzeugreifen nach Anspruch 2 oder 3, **dadurch gekennzeichnet, dass** die Laufstreifenschicht (1₂), betrachtet im Reifenquerschnitt, eine Querschnittsfläche (A_{LB}) mit einem Flächeninhalt von mindestens 15%, insbesondere von mindestes 20%, bevorzugt von mindestens 25%, besonders bevorzugt von mindestens 30%, mehr bevorzugt von mindestens 35%, am meisten bevorzugt von mindestes 40%, des Flächeninhalts der Querschnittsfläche (A_{LS}) des Laufstreifens (1) aufweist.

5. Fahrzeugreifen nach einem der Ansprüche 1 bis 4, **dadurch gekennzeichnet, dass** als Laufstreifenteil (1₂, 6), welcher integraler Bestandteil des Ableitwegs ist, zumindest ein bis zur Laufstreifenaußenfläche (1a) des Laufstreifens (1) reichendes Laufstreifenelement (6) vorgesehen ist, welches, im Reifenquerschnitt betrachtet, in axialer Richtung eine maximale Breite (b_{LE}) von höchstens 40,0 mm, insbesondere von höchstens 20,0 mm, vorzugsweise von höchstens 10,0 mm, bevorzugt von höchstens 8,0 mm, besonders bevorzugt von 2,0 mm bis 6,0 mm, am meisten bevorzugt von 1,0 mm bis 4,0 mm, aufweist und welches den Laufstreifen (1) in radialer Richtung (Doppelpfeil R) vorzugsweise durchsetzt.

6. Fahrzeugreifen nach einem der Ansprüche 2 bis 4 jeweils in Kombination mit Anspruch 5, **dadurch gekennzeichnet, dass** die radial innerste Laufstreifenschicht (1₂) und das bzw. die bis zur Laufstreifenaußenfläche (1a) des Laufstreifens (1) reichende(n) Laufstreifenelement(e) (6) die einzigen Laufstreifenteile (1₂, 6) sind, welche integrale Bestandteile des Ableitwegs sind.

7. Fahrzeugreifen nach einem der Ansprüche 1 bis 6, **dadurch gekennzeichnet, dass** das elektrisch leitende Gummimaterial (G2, G3) des Laufstreifenteils (1₂, 6) bzw. der Laufstreifenteile (1₂, 6) einen Verlustfaktor, ermittelt nach ISO 4661-1 bei einer Temperatur von 70°C (tan d (70°C)), von maximal 0,065, insbesondere von maximal 0,055, aufweist.

8. Fahrzeugreifen nach einem der Ansprüche 1 bis 7, **dadurch gekennzeichnet, dass** das elektrisch leitende Gummimaterial (G2, G3) des Laufstreifenteils (1₂, 6) bzw. der Laufstreifenteile (1₂, 6) eine Shore-Härte-A, ermittelt nach DIN EN ISO 868 bei einer Temperatur von 23°C, von mindestens 61,0 ShA, insbesondere von mindestens 62,0 ShA, vorzugsweise von mindestens 64,0 ShA, besonders bevorzugt von mindestens 65,0 ShA, aufweist.

9. Fahrzeugreifen nach einem der Ansprüche 1 bis 8, **dadurch gekennzeichnet, dass** das elektrisch leitende Gummimaterial (G2, G3) des Laufstreifenteils (1₂, 6) bzw. der Laufstreifenteile (1₂, 6) eine Shore-Härte-A, ermittelt nach DIN EN ISO 868 bei einer Temperatur von 70°C, von mindestens 58,0 ShA, insbesondere von mindestens 60,0 ShA, vorzugsweise von mindestens 61,5 ShA, besonders bevorzugt von mindestens 62,0 ShA, aufweist.

10. Fahrzeugreifen nach einem der Ansprüche 1 bis 9, **dadurch gekennzeichnet, dass** das elektrisch leitende Gummimaterial (G2, G3) des Laufstreifenteils (1₂, 6) bzw. der Laufstreifenteile (1₂, 6) eine Rückprallelastizität, ermittelt nach ISO 4662 bei einer Temperatur von 23°C (R (23°C)), von mindestens 56,0%, vorzugsweise von mindestens 58,0%, aufweist.

11. Fahrzeugreifen nach einem der Ansprüche 1 bis 10, **dadurch gekennzeichnet, dass** das elektrisch leitende Gummimaterial (G2, G3) des Laufstreifenteils (1₂, 6) bzw. der Laufstreifenteile (1₂, 6) eine Rückprallelastizität, ermittelt nach ISO 4662 bei einer Temperatur von 70°C (R (70°C)), von mindestens 67,0%, vorzugsweise von mindestens 70,0%, aufweist.

12. Fahrzeugreifen nach einem der Ansprüche 1 bis 11, **dadurch gekennzeichnet, dass** das elektrisch leitende Gummimaterial (G2, G3) des Laufstreifenteils (1₂, 6) bzw. der Laufstreifenteile (1₂, 6) einen spezifischen elektrischen Widerstand von maximal 1,0 x 10⁵ Ω·m, vorzugsweise von maximal 1,0 x 10⁴ Ω·m, bevorzugt von maximal 5,0 x 10³ Ω·m, besonders bevorzugt von maximal 4,0 x 10³ Ω·m, aufweist.

13. Fahrzeugreifen nach einem der Ansprüche 1 bis 12, **dadurch gekennzeichnet, dass** das elektrisch leitende Gummimaterial (G2, G3) des Laufstreifenteils (1₂, 6) bzw. der Laufstreifenteile (1₂, 6)
- einen Spannungswert bei 100% Dehnung (σ (100%)), ermittelt bei einer Temperatur von 23°C sowie gemäß DIN 53504, von mindestens 3,0 MPa,
- einen Spannungswert bei 200% Dehnung (σ (200%)), ermittelt bei einer Temperatur von 23°C sowie gemäß DIN 53504, von mindestens 8,0 MPa und
- einen Spannungswert bei 300% Dehnung (σ (300%)), ermittelt bei einer Temperatur von 23°C sowie gemäß DIN 53504, von mindestens 13,5 MPa aufweist.

14. Fahrzeugreifen nach einem der Ansprüche 1 bis 13, **dadurch gekennzeichnet, dass** die dem elektrisch leitenden Gummimaterial (G2, G3) des Laufstreifenteils (1₂, 6) bzw. der Laufstreifenteile (1₂, 6) zugrundeliegende Kautschukmischung Acetylenruß(e) in einer Gesamtmenge von 25,0 phr bis 60,0 phr, insbesondere von bis zu 55,0 phr, bevorzugt von 30,0 phr bis 50,0 phr, enthält, wobei es bevorzugt ist,
wenn die Kautschukmischung entweder keinen Ruß enthält, welcher kein Acetylenruß ist oder
wenn die Kautschukmischung Ruß(e), welcher kein Acetylenruß ist bzw. welche jeweils kein Acetylenruß sind, in einer Gesamtmenge von bis zu 20,0 phr, insbesondere von bis zu 15,0 phr, enthält.

15. Fahrzeugreifen nach einem der Ansprüche 1 bis 14, **dadurch gekennzeichnet, dass** der bzw. die Acetylenruß(e) folgende Rußkennzahlen aufweist bzw. aufweisen:
a) Ölabsorptionszahl (24M4-DBP-Zahl) nach ASTM D2414-22
- von 180 ml / 100 g bis 350 ml / 100 g,
- insbesondere von 230 ml / 100 g bis 320 ml / 100 g,
- vorzugsweise von 240 ml / 100 g bis 310 ml / 100 g,
- bevorzugt von 250 ml / 100 g bis 280 ml / 100 g.
b) Jodadsorptionszahl nach ISO 1304
- von 70 mg (Jod) / g bis 90 mg (Jod) / g,
- insbesondere von 75 mg (Jod) / g bis 85 mg (Jod) / g,
- vorzugsweise von 78 mg (Jod) / g bis 82 mg (Jod) / g,
c) Stickstoffadsorptionszahl (STSA Oberfläche) nach ASTM D 6556-21
- von 50 m² / g bis 70 m² / g,
- insbesondere von 55 m² / g bis 65 m² / g,
- vorzugsweise von 58 m² / g bis 63 m² / g.
